# EUROPEAN PATENT SPECIFICATION

(11) **EP 4 399 244 B1**
(45) Date of publication and mention of the grant of the patent: **09.07.2025**
(21) Application number: 22783444.7
(22) Date of filing: 09.09.2022
(51) Int. Cl.: C08L 25/10, C08L 53/02, C08F 297/04, C08J 5/18

(54) **SBC POLYMER COMPOSITIONS WITH IMPROVED ORGANOLEPTIC AND LOW FILM-BLOCKING PROPERTIES**
SBC-POLYMERZUSAMMENSETZUNGEN MIT VERBESSERTEN ORGANOLEPTISCHEN UND NIEDRIGEN FILMBLOCKIERUNGSEIGENSCHAFTEN
COMPOSITIONS DE POLYMÈRE SBC PRÉSENTANT DES PROPRIÉTÉS ORGANOLEPTIQUES ET DE BLOCAGE DE FILM BAS AMÉLIORÉES

(30) Priority: 10.09.2021 EP 21195879
(43) Date of publication of application: 17.07.2024
(73) Proprietor: INEOS Styrolution Group GmbH, 60325 Frankfurt (DE)
(72) Inventor: NIESSNER, Norbert, 67159 Friedelsheim (DE); VERSWYVEL, Michiel, 2800 Mechelen (BE)
(74) Representative: Jacobi, Markus Alexander
(86) International application number: PCT/EP2022/075086
(87) International publication number: WO 2023/036920

(56) References cited:
- WO-A1-2016/034609
- US-A1- 2005 009 990

## Description

The invention relates to a polymer composition comprising a vinylaromatic diene block copolymer with improved organoleptic properties and reduced film blocking, used for extruded film applications, a process for its preparation, and the use of said polymer compositions for the production of films.

Stiff and tough styrene-butadiene block copolymers (SBC) and compositions comprising SBC are known. For the production of shrink films, often mixtures of a tough SBC component and a stiff SBC component, optionally together with general purpose polystyrene, are blended and extruded to a film. In a next online step, the film is heated by hot air and stretched orthogonal (transverse) on the extrusion direction (transverse machine direction orientation (TDO)) by a factor 4 to 6 and eventually also stretched perpendicular (parallel) to machine direction (machine direction orientation (MDO)) by factor up to 1.1. Finally, the edges are cut and the films are wrapped on big rolls. Later, the films are cut into smaller rolls, printed and sealed to a long cylindrical hose. Finally the printed hose is cut into the dimensions of cylindrical labels and shrinked around a container (e.g. a bottle) by applying heat, typically in a heat tunnel. In another process, the film is stretched in MDO direction by factor 2 to 5 and eventually also stretched in TDO by factor up to 1.1. After cutting the film edges and wrapping the film on big rolls, the films are cut into smaller rolls and printed. The label is finally wrapped around a container, cut and glued and in a next step shrinked around a container by the application of heat.

US 2011/0098401 describes mixtures of styrene-butadiene block copolymers A and B for the production of heat-shrinkable films with high shrinkage capability and high stiffness/strength. Preferably SBC copolymer A has the structure S-(B/S)_{A}-S or, preferred, is a single copolymer block (B/S)_{A} wherein (B/S)_{A} is a random vinylaromatic/diene copolymer hard block (diene 5 to 35 wt.-%, Mn 150,000 to 300,000 g/mol) and S is a vinylaromatic polymer hard block. Preferably the SBC block copolymers B are star shaped having short branches Sₑ-(B/S)_{B}-S- and long branches (B/S)_{A}-Sᵢ-(B/S)_{B}-S~ where (B/S)_{B} is a soft random copolymer block (diene 80 to 40 wt.-%), Sₑ, Sᵢ are long and S is a short vinylaromatic polymer block.

WO 2018/114569 and WO 2018/153808 describe SBC mixtures for shrink wrap films comprising a stiff star-shaped block copolymer A or A1 having two short branches of a single copolymer block (B/S)_{Ai} (Mn 5,000 to 15,000 g/mol) and two long branches of the structure Sₜ-[(B/S)_{A}]ₙ-(B/S)_{Ai} or [(B/S)_{A}]ₙ-(B/S)_{Ai} wherein Mn of block [(B/S)_{A}]ₙ is 50,000 to 150,000 g/mol and Mn of block Sₜ is 3,000 to 8,000 g/mol.

Further comprised is a tough star shaped block copolymer B (asymmetrical) or A2 (symmetrical) which preferably has three or two short branches of structure Sₑ-(B/S)_{B}~ or three branches Sₑ-(B/S)_{B}-Sₛ~ and one or two long branch(es) of structure (B/S)_{Ae}-Si-(B/S)_{B}∼ or one branch (B/S)_{Ae}-Sᵢ-(B/S)_{B}-Sₛ∼; where Mn of block (B/S)_{B} is 5,000 to 40,000 g/mol, Mn of block (B/S)_{Ae} is 30,000 to 100,000 g/mol, Mn of block Sₑ and Sᵢ is 5,000 to 30,000 g/mol and Mn of block Sₛ is < 2,500 g/mol. The diene content of (random) hard blocks (B/S)_{A} of SBCs A, A1, B and A2 is 35 to 5 wt.-%; the diene content of soft blocks (B/S)_{B} of SBC B is 80 to 40 wt.-% and of SBC A2 is 100 to 75 wt.-%, respectively.

US 2005/0009990 discloses mixtures comprising linear block copolymers made from vinylaromatic monomers and from dienes of the structure (I) S1-B1-S2 and (II) S3-B2-S4, where S1 is a block made from vinylaromatic monomers with number-average molar mass Mn in the range from 40,000 to 100,000 g/mol, each of S2, S3 and S4 is a block made from vinylaromatic monomers with number-average molar mass Mn in the range from 5,000 to 20,000 g/mol, each of B1 and B2 is a block made from dienes or a copolymer block made from dienes and from vinylaromatic monomers with number-average molar mass Mn in the range from 15,000 to 40,000 g/mol, and the ratio of the block copolymers (I)/(II) is in the range from 0.6 to 2. The transitions between the blocks are sharp. The Examples show simultaneously prepared mixtures (ratio 0.75 or 1) of SBC (I) (Mn ≈ 97,000 to 99,000 g/mol) and SBCs (II) (Mn ≈ 45,000 to 49,000 g/mol) which mixtures have a butadiene content in the range of 21.6 to 35 wt.%. Blends of said mixtures with GPPS have high toughness together with high stiffness and can be used for the production of thin films.

Films produced from the SBC polymers or polymer compositions according to the prior art often have the tendency to stick when wrapped onto rolls during the production process. This blocking of the stretched film can cause various technical problems. In some cases, it is even impossible to unwind the roll after several days. Prior art films often suffer unwanted stretching and eventually ripping during processing.

Moreover, prior art materials often have an unpleasant odor. Thus, the blocking of the films and the organoleptic properties of said materials are still in need of improvement.

One object of the invention is to provide a material based on styrene butadiene blockcopolymers (SBC) which allows extrusion of blown and cast films with high melt strength and which is suitable for the production of films with good mechanical properties and with reduced blocking. Moreover, the organoleptic properties of the material shall be improved.

The problem was solved by the polymer composition according to the claims.

One aspect of the invention is a polymer mixture (A) comprising (in particular consisting of) components (A1), (A2), (A3) and component (A4):
(A1): at least one linear block copolymer (A1) comprising at least two polymer blocks S consisting of 85 to 100% by weight of at least one vinylaromatic monomer and optionally of 0 to 15% by weight of at least one conjugated diene, and at least one polymer block B consisting of 85 to 100% by weight of at least one conjugated diene and optionally of 0 to 15% by weight of at least one vinyl aromatic monomer; wherein at least two of the blocks S are terminal blocks S1 and S2;
   wherein block copolymer (A1)
   - consists of 30 to 60 % by weight, of at least one vinylaromatic monomer, in particular styrene, and 40 to 70% by weight of at least one conjugated diene, in particular butadiene and/or isoprene, more preferably butadiene;
   - has a number average molecular weight Mn of from 100,000 to 145,000 g/mol, and
   - has sharp block transitions;
(A2): at least one linear block copolymer (A2) comprising at least two polymer polymer blocks S consisting of 85 to 100% by weight of at least one vinylaromatic monomer and optionally of 0 to 15% by weight of at least one conjugated diene, and at least one polymer block B consisting of 85 to 100% by weight of at least one conjugated diene and optionally of 0 to 15% by weight of at least one vinyl aromatic monomer; wherein at least two of the blocks S are terminal blocks S1 and S2;
   wherein block copolymer (A2)
   - consists of 66 to 84% by weight of at least one vinylaromatic monomer, in particular styrene, and 16 to 34% by weight, of at least one conjugated diene, in particular butadiene and/or isoprene, more preferably butadiene;
   - has a number average molecular weight Mn of from 150,000 to 200,000 g/mol, preferably 110,000 to 190,000 g/mol, more preferably 115,000 to 180,000 g/mol; and
   - has sharp block transitions;
(A3): at least one linear block copolymer (A3) comprising at least two polymer blocks S consisting of 85 to 100% by weight of at least one vinylaromatic monomer and optionally of 0 to 15% by weight of at least one conjugated diene, and at least one polymer block B consisting of 85 to 100% by weight of at least one conjugated diene and optionally of 0 to 15% by weight of at least one vinyl aromatic monomer; wherein at least two of the blocks S are terminal blocks S1 and S2;
   wherein block copolymer (A3)
   - consists of 40 to 65 % by weight, preferably from 50 to 65% by weight, of at least one vinylaromatic monomer, in particular styrene, and 35 to 6% by weight, preferably 35 to 50% by weight, of at least one conjugated diene, in particular butadiene and/or isoprene, more preferably butadiene;
   - has a number average molecular weight Mn of from 150,000 to 200,000 g/mol; and
   - has sharp block transitions;
(A4): at least one copolymer (A4) comprising at least one random copolymer block (B/S) made from 80 to 95 wt.-% of vinylaromatic monomers and 5 to 20 wt.-% of dienes; and
   wherein copolymer (A4) has a number average molecular weight Mn of more than 200,000 g/mol;
   wherein the proportion of a soft phase of mixture (A), built from 85 to 100% by weight of polymerized conjugated diene and optionally up to 15 wt.-% polymerized vinylaromatic monomer, is from - based on mixture (A) - 15 to 34% by volume, and
   wherein the soft phase of mixture (A) - embedded in a hard phase of mixture (A), built from 85 to 100% by weight of polymerized vinylaromatic monomer - has a cylindrical morphology; and
   wherein the overall number-average molecular weight Mn of mixture (A) is at least 120,000 g/mol;
   in polymer mixture (A) component (A4) is present in an amount of from 30 to 60% by weight;
   the number average molecular weight Mn is determined by GPC according to ISO 16014-3:2012; and
   the morphology is determined by transmission electron microscopy..

In the context of the invention, "sharp block transitions" means that that the transitions between the blocks of the block copolymer are sharply separated (i.e. the composition changes suddenly and not over a gradient).

Block copolymers (A1), (A2), (A3) and copolymer (A4) do not comprise blocks with tapered block transitions.

Morphologies are determined by transmission electron microscopy on stained ultramicrotome samples of SBC polymers or polymer compositions.

In the context of the invention "diene" means a conjugated diene. "Butadiene" means 1,3-butadiene.

In the context of the invention a (co)polymer comprising a monomer and optionally further comonomers means a (co)polymer comprising structural units derived from said polymerized monomer(s).

In the context of the invention a polymer (block) "essentially consists of" at least one vinylaromatic monomer or at least one conjugated diene means that the polymer consists of 85 to 100% by weight of the at least one vinylaromatic monomer or 85 to 100% by weight of the at least one conjugated diene and optionally of 0 to 15% by weight of at least one conjugated diene or 0 to 15% by weight of at least one vinyl aromatic monomer, respectively.

Preferably polymer blocks S, S1 and/or S2 of block copolymers (A1), (A2) and (A3) consist of 90 to 100 wt.-% of at least one vinylaromatic monomer and 0 to 10 wt.-% of at least one conjugated diene. Preferably the at least one polymer block B of block copolymers (A1), (A2) and (A3) consists of 90 to 100 wt.-% of at least one conjugated diene and 0 to 10 wt.-% of at least one vinylaromatic monomer, more preferably polymer block B is a diene homopolymer block.

In the context of the invention, the number average molecular weight Mn is determined by GPC according to ISO 16014-3:2012 (size exclusion with relative calibration method against polystyrene standards at a temperature < 60 °C).

### Polymer Mixture (A)

Often, the mixture (A) according to the invention comprises (in particular consists of):
5 to 60% by weight of block-copolymer (A1);
5 to 60% by weight of block-copolymer (A2);
5 to 60% by weight of block-copolymer (A3); and
30 to 60% by weight of copolymer (A4);
wherein the total weight of components (A1), (A2), (A3) and (A4), adds up to 100% by weight.

Furthermore, often the mixture (A) according to the invention comprises (in particular consists of):
5 to 15 wt.-%, often 5 to 10 wt.-%, of polymer (A1);
20 to 35 wt.-%, often 25 to 35 wt.-%, of polymer (A2);
10 to 25 wt.-%, often 10 to 20 wt.-%, of polymer (A3);
30 to 60 wt.-%, often 40 to 60 wt.-% of polymer (A4);
wherein the total weight of components (A1), (A2), (A3) and (A4) adds up to 100% by weight.

Preferably the mixture (A) is a solution blend of separate solutions of polymers (A1), (A2), (A3) and (A4). In each polymer solution the polymer is preferably comprised in an amount of 25 to 35 wt.-%, more preferably 30 wt.-%. The afore-mentioned polymer solutions may comprise additives, in particular stabilizers, in usual amounts. Suitable solvents for obtaining the afore-mentioned polymer solutions are common solvents used for anionic polymerizations (see process for the preparation of the mixture (A)).

Generally the proportion of a soft phase, based on mixture (A), is from 15 to 34% by volume, preferably 20 to 32% by volume. The soft phase is built essentially (85 to 100 wt.-%) from polymerized conjugated diene and optionally up to 15 wt.-% polymerized vinylaromatic monomer.

Preferably polymer blocks S, S1 and/or S2 of block copolymers (A1), (A2) and (A3) consist of 90 to 100 wt.-% of at least one vinylaromatic monomer and 0 to 10 wt.-% of at least one conjugated diene. Preferably the at least one polymer block B of block copolymers (A1), (A2) and (A3) consists of 90 to 100 wt.-% of at least one conjugated diene and 0 to 10 wt.-% of at least one vinylaromatic monomer. More preferably block B of block copolymers (A1), (A2) and (A3) is a homopolymer block of a conjugated diene, in particular polybutadiene.

### Block Copolymer (A1)

Preferably linear block copolymer (A1) consists of two terminal polymer blocks S1 and S2, and one homopolymer block B. Such preferred linear block copolymers (A1) have the structure (I) S1-B-S2.

Generally, polymer blocks S, S1 and S2 consist of 85 to 100 wt.-%, preferably 90 to 100 wt.-%, of at least one vinylaromatic monomer, and 0 to 15 wt.-%, preferably 0 to 10 wt.-%, of at least one conjugated diene, more preferably blocks S, S1 and S2 are homopolymer blocks of vinylaromatic monomers, in particular polystyrene.

Generally the at least one polymer block B consists of 85 to 100 wt.-%, preferably 90 to 100 wt.-%, of at least one conjugated diene, and 0 to 15 wt.-%, preferably 0 to 10 wt.-%, of at least one vinylaromatic monomer, more preferably block B is a homopolymer block of a conjugated diene, in particular polybutadiene.

Terminal polymer blocks S1 and S2 can have the same or different number average molecular weight (Mn).

Examples of vinylaromatic monomers which may be used for the preparation of block copolymer (A1) are styrene, alpha-methylstyrene, ring-alkylated styrenes, such as p-methylstyrene or tert-butylstyrene, or a mixture of these. Preferred are styrene and/or alpha-methylstyrene, in particular preferred is styrene.

Suitable dienes which may be used for the preparation of block copolymer (A1) are butadiene, isoprene, 2,3-dimethylbutadiene, 1,3-pentadiene or 1,3-hexadiene, or a mixture of these; butadiene and isoprene are preferred; butadiene is particularly preferred.

Preferably block copolymer (A1) consists of 35 to 50% by weight of at least one vinylaromatic monomer, in particular styrene, and 50 to 65% by weight of at least one conjugated diene, in particular butadiene and/or isoprene, preferably butadiene. Particularly preferred block copolymers (A1) are built from styrene and butadiene. Preferably block copolymer (A1) has a number average molecular weight (Mn) of from 110,000 to 140,000 g/mol.

### Block Copolymer (A2)

Preferably linear block copolymer (A2) consists of two terminal polymer blocks S1 and S2 and one polymer block B. Such preferred linear block copolymers (A2) have the structure (I) S1-B-S2.

Terminal polymer blocks S1 and S2 can have the same or different number average molecular weight (Mn).

Generally, polymer blocks S, S1 and S2 consist of 85 to 100 wt.-%, preferably 90 to 100 wt.-%, of at least one vinylaromatic monomer, and 0 to 15 wt.-%, preferably 0 to 10 wt.-%, of at least one conjugated diene.

Generally the at least one polymer block B consists of 85 to 100 wt.-%, preferably 90 to 100 wt.-%, of at least one conjugated diene, and 0 to 15 wt.-%, preferably 0 to 10 wt.-%, of at least one vinylaromatic monomer, more preferably block B is a homopolymer block of a conjugated diene, in particular polybutadiene.

Examples of vinylaromatic monomers which may be used for the preparation of block copolymer (A2) are as described before for (A1). Suitable dienes which may be used for the preparation of block copolymer (A2) are as described before for (A1).

Preferably block copolymer (A2) consists of 67 to 82% by weight of at least one vinylaromatic monomer, in particular styrene, and 18 to 33% by weight, of at least one conjugated diene, in particular butadiene and/or isoprene, more preferably butadiene.

Particularly preferred block copolymers (A2) are formed from styrene and butadiene.

Preferably block copolymer (A2) has a number average molecular weight Mn of from 155,000 to 185,000 g/mol.

### Block Copolymer (A3)

Preferably linear block copolymer (A3) consists of two terminal polymer blocks S1 and S2, and one polymer block B. Such preferred linear block copolymers (A3) have the structure (I) S1-B-S2.

Terminal polymer blocks S1 and S2 can have the same or different number average molecular weight (Mn).

The composition of polymer blocks S, S1, S2 and B of block copolymer (A3) may independently be as described above for block copolymer (A2).

Examples of vinylaromatic monomers which may be used for the preparation of block copolymer (A3) are as described before for (A1).

Suitable dienes which may be used for the preparation of block copolymer (A3) are as described before for (A1).

Preferably block copolymer (A3) consists of 50 to 65% by weight, preferably 55 to 65% by weight, of at least one vinylaromatic monomer, in particular styrene, and 35 to 50% by weight, preferably 35 to 45% by weight, of at least one conjugated diene, in particular butadiene and/or isoprene, more preferably butadiene.

Particularly preferred block copolymers (A3) are formed from styrene and butadiene.

Preferably block copolymer (A3) has a number average molecular weight Mn of from 150,000 to 180,000 g/mol.

### Copolymer (A4)

Preferably copolymer (A4) consists of at least one, preferably one, random copolymer block (B/S) built from 80 to 95 wt.-%, preferably 85 to 95 wt.-%, of at least one vinylaromatic monomer and 5 to 20 wt.-%, preferably 5 to 15 wt.-%, of at least one conjugated diene.

Examples of vinylaromatic monomers which may be used for the preparation of copolymer (A4) are as described before for (A1). Suitable dienes which may be used for the preparation of copolymer (A4) are as described before for (A1).

It is preferable that the copolymer (A4) consists of a single copolymer block (B/S).

Preferably copolymer (A4) consists of 80 to 95% by weight of styrene; and 5 to 20% by weight of butadiene and/or isoprene, preferably butadiene.

More preferably copolymer (A4) consists of 85 to 95% by weight of repeating units derived from at least one aromatic vinyl monomer, in particular styrene; and 5 to 15% by weight of repeating units derived from at least one diene, in particular butadiene and/or isoprene, more preferably butadiene.

In particular component (A4) is a styrene butadiene copolymer with random distribution.

Generally the number average molecular weight (Mn) of copolymer (A4) is more than 200,000 g/mol; preferably 210,000 to 350,000 g/mol, more preferably 220,000 to 300,000 g/mol.

### Preparation of Polymer Mixture (A)

A further aspect of the invention is a process for the preparation of the mixture (A) according to the invention. The inventive process is often a batch process. According to the process of the invention block copolymers (A1), (A2), (A3) and copolymer (A4) are each prepared separately in four reactor vessels by sequential anionic polymerization of vinylaromatic monomers and conjugated dienes with organo-alkali-metal initiators.

Sequential anionic polymerization is known per se. The anionic polymerization initiator used may be any of the conventional mono- or bifunctional alkyl, aryl, or aralkyl compounds of an alkali metal. Preferably monolithium hydrocarbon compounds R-Li are used as initiator, where R can be an aliphatic, cycloaliphatic, or aromatic hydrocarbon moiety having from 1 to 12 C atoms. It is preferable to use n-butyllithium or sec-butyllithium, more preferably sec-butyllithium.

The amount of polymerization initiator needed depends on the desired molecular weight. It is generally in the range from around 0.01 to around 0.3 mol %, preferably 0.01 to 0.3 mol%, based on the total amount of monomer.

According to the process of the invention the polymerization is undertaken in the presence of a solvent and under inert atmosphere. Suitable solvents are the conventional aliphatic, cycloaliphatic, or aromatic hydrocarbons having from 4 to 12 carbon atoms and used for anionic polymerization, such as pentane, hexane, heptane, cyclohexane, methylcyclohexane, isooctane, benzene, alkylbenzenes, such as toluene, xylene, ethylbenzene, or decalin, or a suitable mixture. Preference is given to the use of cyclohexane and methylcyclohexane, in particular cyclohexane. A commonly used inert at-mospere is nitrogen gas.

The polymerization temperature is generally from 0 to 100°C, preferably from 30 to 90°C, particularly preferably from 40 to 90°C. The polymerization reaction is generally carried out in a plurality of stages, where the initiator is added once, using a single initiation process.

The sequence of monomer addition depends on the selected block structure. In the case of the batch process according to the invention, it is preferable to begin by using all of, or a portion of, the solvent, such as cyclohexane, as initial charge. Next, the vinylaromatic and optional diene monomers required for the block S1 are added.

Afterwards the initial charge of initiator, such as sec-butyllithium, that is required to establish the desired molar mass, plus what is known as a titration amount, which serves to destroy traces of impurities in the solvent and in the reactor vessel is added. In order to get sharp block transitions it is required to let the polymerization polymerization run until all monomer has reacted before adding the second monomer addition. This is typically observed by monitoring the reaction temperature. All monomers have reacted when the temperature starts to decrease after a temperature increase during the reaction. Then, after total consumption of the vinyl aromatic monomer and of the optional diene monomer, further diene monomer and optional vinylaromatic monomer is added and polymerized, in order to produce the block B. Thereafter, after total consumption of said monomers, the remaining amount of vinylaromatic and optional diene monomers are added and polymerized, in order to produce the block S2.

Random copolymer blocks and copolymers with random distribution (such as copolymer (A4)) can by way of example be obtained by anionic polymerization using alkyllithium compounds in the presence of randomizers, such as tetrahydrofuran, or potassium salts. Preference is given to use of potassium salts where the molar ratio of anionic initiator to potassium salt is in the range from 25:1 to 60:1, particularly preferably from 30:1 to 40:1.

This method can at the same time achieve a low proportion of 1,2 linkages of the butadiene units. Suitable potassium salts are K alcoholates, in particular those soluble in the polymerization solvent, e.g. tert-amyl alcoholate or triethylcarbinolate, or other C-rich tertiary alcoholates.

Once the polymerization has ended, a chain terminator is usually added to each separate solution of the living polymer chains of block copolymers (A1), (A2), (A3) and copolymer (A4) in order to terminate the polymerization by capping the living polymer chains. Suitable chain terminators are protonating substances or Lewis acids, for example water, alcohols (such as isopropanol), aliphatic or aromatic carboxylic acids, or else inorganic acids, such as carbonic acid or boric acid.

By use of a chain terminator as afore-mentioned according to this example a linear block copolymer (A1) of the structure S1-B-S2 is obtained.

According to the process of the invention, after termination of the polymerization, the separately obtained solutions of block copolymers (A1), (A2), (A3) and copolymer (A4) are mixed together to give a solution of a mixture (A) according to the invention. Following work up steps like degassing of the solvent - and optional granulation - are carried out with the obtained solution to give mixture (A) according to the invention.

The process according to the invention for the preparation of a polymer mixture (A) according to the invention comprises the following steps:
(i) separate preparation of block copolymers (A1), (A2), (A3) and copolymer (A4) in four reactor vessels by sequential anionic polymerization of vinylaromatic monomers and conjugated dienes with organo-alkali-metal initiators in a solvent and under inert atmosphere;
(ii) after termination of the polymerization, mixing together the separately obtained solutions of block copolymers (A1), (A2), (A3), and copolymer (A4), to obtain a solution of mixture (A); and
(iii) then degassing of the solution of mixture (A) obtained in step (ii), and optional granulation.

The (batch) process according to the invention has the advantage that due to the mixing of polymer solutions of the separately obtained components (A1), (A2), (A3) and (A4), the resulting mixture (A) has low cross-linking.

In prior art processes often melt mixing is used as standard method to obtain a homogeneous mixture of the SBC polymers. One major problem of melt mixing is that due to the required high temperatures undesired increased crosslinking of the butadiene units of the block copolymers occurs. Beside this advantage of solution blending, the introduction of additional shear stress in the individual components and blend components during the traditional further processing and melt blending is avoided, which will lead to a thermal history that will affect the final properties of the polymer matrix. By solution blending this shear stress is reduced to only one downstream processing step.

### Polymer Composition

A further aspect of the invention is a polymer composition comprising (in particular consisting of) polymer mixture (A) (= component (A)) and further one or more optional additives and/or processing aids (B) (= component (B)) and/or at least one optional thermoplastic polymer (C) - different from components (A1), (A2), (A3), (A4) and (B).

Said additives and/or processing aids (B) may be used in amounts of 0.01 to 5 wt.-%, based on the total polymer composition.

Suitable additives and/or processing aids (B) are in particular stabilizers, antiblocking agents, dyes and UV absorbers.

Preferred is the use of a stabilizer, in particular oxygen radical scavengers such as Irganox^{®} 1010, Songnox^{®} 1010, Irganox 1076, Irganox 565 and blends thereof, carbon radical scavengers such as Sumilizer^{®} GS, Sumilizer GM and blends thereof, and/or secondary stabilizers such as Irgafos^{®} 168. Said stabilizers are commercially available. The afore-mentioned stabilizers are preferably used in amounts of 0.01 to 0.5 wt.-%, more preferably 0.1 to 0.3 wt.-%. Furthermore preferred is the use of an antiblocking agent such as high impact polystyrene (HIPS). Antiblocking agents are preferably used in amounts of 0.1 to 1 wt.-%.

Optional component (C) is at least one thermoplastic polymer (C) - different from components (A1), (A2), (A3), (A4) and (B) - in particular at least one vinylaromatic homo- or copolymer, preferably styrene homo- or copolymer, e.g. standard polystyrene (GPPS). Said thermoplastic polymers (C) may be present in amounts of 0.1 to 25 wt.-%, preferably 0.1 to 10 wt.-%, based on the entire polymer composition.

Often the polymer composition according to the invention comprises (in particular consists of):
70 to 100 wt.-% of mixture (A),
0 to 5 wt.-% of one or more additives and/or processing aids (B), and
0 to 25 wt.-% of at least one thermoplastic polymer (C),
where the amounts of (A), (B) and (C) add up to 100 wt.-%.

Furthermore, often the polymer composition according to the invention comprises (in particular) consists of:
70 to 98.99 wt.-%, preferably 85 to 98.99 wt.-%, of mixture (A),
0.01 to 5 wt.-% of one or more additives and/or processing aids (B), and
0.1 to 25 wt.-%, preferably 0.1 to 10 wt.-%, of at least one thermoplastic polymer (C), where the amounts of (A), (B) and (C) add up to 100 wt.-%.

The polymer composition according to the invention may be obtained by commonly known methods such as melt mixing (e.g. extrusion) of mixture (A) and, if present, components (B) and/or (C) preferably at a temperature in the range of from 180 to 250°C. Preferably for the preparation of the polymer composition according to the invention an extruder, preferably a counter-rotating twin screw extruder, is used.

The addition of component (B) - preferably as solution in a suitable solvent like such as described above for the polymerization of (A1) to (A4) - may take place during the preparation of the polymer composition at any desired juncture once the polymerization of polymers (A1), (A2), (A3) and (A4) has ended, e.g. prior to or, preferably, after termination and before devolatilization, or other work-up steps.

It has been found that materials based on mixture (A) allow the extrusion of blown and cast films with high melt strength.

A further aspect of the invention is a shaped article, in particular a film, produced from mixture (A) or a polymer composition according to the invention. Due to the specific structure with sharp block transitions of the used block copolymers, the specific block lengths, the specific composition of each block and the specific overall number-average molecular weight Mn of mixture (A), films produced from mixture (A) or a polymer composition according to the invention have good mechanical properties and show a reduced blocking (layer-to-layer stickiness when wrapped onto rolls during the production process). Moreover, it has been found that - due to the cylindrical morphology and the specific total diene proportion of the soft phase - the organoleptic properties of materials based on mixture (A) or a polymer composition according to the invention are significantly improved.

A further aspect of the invention is the use of mixture (A) or of the polymer composition according to the invention for the preparation of (thin) films. The invention is further illustrated by the claims and the following Examples.

### Examples

All used solvents and monomers were dried and purified prior to use.

### Test Methods

The number average molecular weight (Mn) was determined by GPC according to ISO 16014-3:2012 (size exclusion with relative calibration method against polystyrene standards at a temperature < 60 °C).

Organoleptic trials were done in a 100 ml Erlenmeyer flask, filled with 10 g of SBC polymer granules. Boiling water was prepared and poured directly out of the boiler into the Erlenmeyer flask. The water vapor was gently waved by hand towards the nose, and rated by a panel of at least 3 persons by following criteria:
- 0 =: completely neutral; no smell at all
- 1 =: slight indication of smell
- 2 =: smell detectable but fully acceptable
- 3 =: strong smell, still acceptable
- 4 =: very strong smell, inacceptable

Extrudability (melt strength) was rated in a "Rheotens type" test as follows: Polymer melt was heated to T = 200°C and 230°C) and poured out of the heated vessel:

| | T= 200°C | T=230°C | Rating |
|---|---|---|---|
| Observation | viscous flow, No droplets | viscous flow, no droplets | high extrudability |
| | Viscous flow No/few droplets | light flow, few/many droplets | good extrudability |
| | Light flow Few/many droplets | light flow many droplets | poor extrudability |

Film blocking (stickyness) was tested by casting a 1 mm film from a 220°C hot melt on a chilled roll, followed by compressing a double film layer by an external weight with 5 kg on 10 cm². After 1 day, the film was manually separated:
- 0 =: easy separation, no stickiness
- 1 =: separation possible with slight stickiness
- 2 =: separation possible but strong stickiness

The tensile properties were determined according to DIN EN ISO 527-3:2019-02.

Morphologies were determined by transmission electron microscopy on OsO₄ stained ultramicrotome samples of SBC polymers or compositions thereof.

### General Preparation Method of Styrene Butadiene Block Copolymers

The tested SBC block copolymers were obtained by living anionic polymerization of styrene and butadiene in anhydrous cyclohexane under exclusion of moisture at temperatures of approximately 50 to 70 °C, using sec-Butyl lithium as initiator. Reaction times: between 2.5 and 3.5 hours.

Tapered blocks - of linear SBCs of the structure S1-B-S2 or star shaped SBCs having branches of structure S1-B-S2~ - were synthesized by simultaneous addition of styrene and butadiene, which leads to a polymerization of butadiene in first instance, followed by a tapered sequence that ends up in a short styrene sequence.

Sharp blocks - of linear SBCs of the structure S1-B-S2 or star shaped SBCs having branches of structure S1-B-S2~ - were synthesized by first addition and polymerization of styrene up to complete monomer consumption and then addition and polymerization of butadiene up to complete monomer consumption.

Then, - in case of linear SBCs - isopropanol was added as chain terminator or- in case of star shaped SBCs - epoxydized soybean oil was added as coupling agent at a ratio of 1L epoxydized soybean oil per 9.01 mol of sec-Butyl lithium initiator used.

Finally, each SBC polymer solution was acidified with CO₂/water and stabilized with 1500 ppm Irganox 1010, 1500 ppm Sumilzer GS and 1800 ppm Irgaphos 168. The concentration of the final block polymer was 30 % by weight.

### Example 1

Linear block copolymers (A1), (A2) and (A3) with sharp block transitions and random copolymer (A4) (used randomizer: potassium tert-amylate) used for the preparation of mixture (A) were polymerized separately in four reactor vessels by living anionic polymerization of styrene and butadiene in anhydrous cyclohexane under exclusion of moisture at temperatures of approximately 50 to 70 °C, using sec-butyl lithium as initiator. Reaction times: between 2.5 and 3.5 hours. The general polymerization procedure was as described hereinbefore.

The obtained linear block copolymers are characterized as follows:
SBC copolymer (A1):
   - Mn = 130,000 g/mol; butadiene content = 61 wt.-%
   - S1-B-S2 wherein
      ∘ S1 and S2 = styrene homopolymer blocks with same Mn
      ∘ B = butadiene homopolymer block
SBC copolymer (A2):
   - Mn = 170,000 g/mol; butadiene content = 26 wt.-%
   - S1-B-S2 wherein
      ∘ S1 and S2 = polymer blocks consisting of styrene and butadiene (wt.-ratio of 9/1), each block having same Mn
      ∘ B = butadiene homopolymer block
SBC copolymer (A3):
   - Mn = 160,000 g/mol; butadiene content = 39 wt.-%
   - S1-B-S2
      ∘ S1 and S2 = polymer blocks consisting of styrene and butadiene (wt.-ratio of 9/1), each block having same Mn
      ∘ B = butadiene polymer block
Copolymer (A4):
   - Mn = 260,000 g/mol; butadiene content = 13 wt.-%
   - randomized styrene/butadiene copolymer

The stabilized solutions (30 wt.-% polymer) of separately obtained linear SBCs (A1), (A3), (A4) and copolymer (A2) were mixed.

The obtained solution blend had the following composition:
48.4 wt.-% of polymer (A4), in particular 48.43 wt.-% of polymer (A4),
28.4 wt.-% of polymer (A2), in particular 28.43 wt.-% of polymer (A2),
16.8 wt.-% of polymer (A3), in particular 16.83 wt.-% of polymer (A3),
6.3 wt.-% of polymer (A1), in particular 6.31 wt.-% of polymer (A1).

The total butadiene content of the obtained polymer composition is 24.1 wt.-%.

Each solution (single SBC copolymer or blend) according to comparative examples C1 to C6 and Example 1 (see Table 1 below) was fed to a 25 mm twin screw extruder and the cyclohexane was degassed via vacuum and extruder domes at melt temperatures of approximately 200 °C to a residual cyclohexane content of 2000 mg per kg of polymer. The polymer melt was extruded through a die and the strands were cut by a strand pelletizer.

For the preparation of films, films of a desired thickness were casted from a 220°C hot melt of the SBC or its blend with GPPS on chilled rolls by use of a single screw extruder. The obtained test data are shown in Table 1. Examples C1 to C6 are comparative Examples.

**Table 1: Rating of different SBC structures**

| Example | Structure | Morphology | Butadiene (wt.-%) | Mn (g/mol) | Stickyness | Extrudability | Organo-leptics | Elongation at break (%) |
|---|---|---|---|---|---|---|---|---|
| C1 | SBC star with tapered block | lamellae | 26 | 220,000 | 2(high) | high | 3 (poor) | 250 |
| C2 | SBC star with sharp block | lamellae | 26 | 200,000 | 2(high) | high | 3 (poor) | 150 |
| C3 | SBC star with tapered block + 60 wt.-% PS* | cylindrical | 26 | 220,000 | 1(low) | high | 3 (poor) | 15 |
| C4 | SBC linear with tapered block | lamellae | 27 | 82,000 | 2(high) | poor | 3 (poor) | 400 |
| C5 | SBC linear with sharp block | cylindrical | 27 | 74,000 | 1(low) | poor | 1 (good) | 30 |
| C6** | SBC** linear with sharp block | cylindrical | 27 | 148,000 | 1(low) | good | 1 (good) | 50 |
| 1 | Blend of linear SBCs with sharp blocks | cylindrical | 24 | 200,000 | 1(low) | good | 1 (good) | 30 |

| | | | | | | | | |
|---|---|---|---|---|---|---|---|---|
| * a standard radically polymerized styrene with Mw 250,000 g/mol and Mn 100,000 g/mol **SBC copolymer according to counterpart application with same priority date | | | | | | | | |

The data show that polymer compositions according to inventive Example 1 show an improved extrudability (melt strength) and low stickiness in comparison to a blend of a star shaped SBC with tapered blocks and standard polystyrene which has cylindrical morphology (cp. Example C3).

Moreover, the organoleptic properties of the polymer composition according to inventive Example 1 are improved in comparison to Examples C1 to C5.

The shaped article, in particular films, produced from the SBC mixture according to the example have improved properties

## Claims

1. A polymer mixture (A) comprising components (A1), (A2), (A3) and component (A4):
(A1): at least one linear block copolymer (A1) comprising at least two polymer blocks S consisting of 85 to 100% by weight of at least one vinylaromatic monomer and optionally of 0 to 15% by weight of at least one conjugated diene, and at least one polymer block B consisting of 85 to 100% by weight of at least one conjugated diene and optionally of 0 to 15% by weight of at least one vinyl aromatic monomer;
wherein at least two of the blocks S are terminal blocks S1 and S2;
wherein block copolymer (A1)
▪ consists of 30 to 60 % by weight, of at least one vinylaromatic monomer, in particular styrene, and 40 to 70% by weight of at least one conjugated diene, in particular butadiene and/or isoprene, more preferably butadiene;
• has a number average molecular weight Mn of from 100,000 to 145,000 g/mol, and
• has sharp block transitions;
(A2): at least one linear block copolymer (A2) comprising at least two polymer polymer blocks S consisting of 85 to 100% by weight of at least one vinylaromatic monomer and optionally of 0 to 15% by weight of at least one conjugated diene,
and at least one polymer block B consisting of 85 to 100% by weight of at least one conjugated diene and optionally of 0 to 15% by weight of at least one vinyl aromatic monomer;
wherein at least two of the blocks S are terminal blocks S1 and S2;
wherein block copolymer (A2)
• consists of 66 to 84% by weight of at least one vinylaromatic monomer, in particular styrene, and 16 to 34% by weight, of at least one conjugated diene, in particular butadiene and/or isoprene, more preferably butadiene;
• has a number average molecular weight Mn of from 150,000 to 200,000 g/mol; and
• has sharp block transitions;
(A3): at least one linear block copolymer (A3) comprising at least two polymer blocks S consisting of 85 to 100% by weight of at least one vinylaromatic monomer and optionally of 0 to 15% by weight of at least one conjugated diene, and at least one polymer block B consisting of 85 to 100% by weight of at least one conjugated diene and optionally of 0 to 15% by weight of at least one vinyl aromatic monomer;
wherein at least two of the blocks S are terminal blocks S1 and S2;
wherein block copolymer (A3)
• consists of 40 to 65 % by weight, preferably from 50 to 65% by weight, of at least one vinylaromatic monomer, in particular styrene, and 35 to 60% by weight, preferably 35 to 50% by weight, of at least one conjugated diene, in particular butadiene and/or isoprene, more preferably butadiene;
• has a number average molecular weight Mn of from 150,000 to 200,000 g/mol; and
• has sharp block transitions;
(A4): at least one copolymer (A4) comprising at least one random copolymer block (B/S) built from 80 to 95 wt.-% of at least one vinylaromatic monomer and 5 to 20 wt.-% of at least one conjugated diene; and
wherein copolymer (A4) has a number average molecular weight Mn of more than 200,000 g/mol, preferably 210,000 to 350,000 g/mol;
wherein
• the proportion of a soft phase of polymer mixture (A), built from 85 to 100% by weight of polymerized conjugated diene and optionally up to 15 wt.-% polymerized vinylaromatic monomer, is from - based on mixture (A) - 15 to 34% by volume;
• the soft phase of polymer mixture (A) - embedded in a hard phase of mixture (A), built from 85 to 100% by weight of polymerized vinylaromatic monomer - has a cylindrical morphology;
• the overall number-average molecular weight Mn of polymer mixture (A) is at least 120,000 g/mol;
• in polymer mixture (A) component (A4) is present in an amount of from 30 to 60% by weight;
• the number average molecular weight Mn is determined by GPC according to ISO 16014-3:2012; and
the morphology is determined by transmission electron microscopy.

2. A polymer mixture (A) according to claim 1 comprising:
5 to 60% by weight of block-copolymer (A1);
5 to 60% by weight of block-copolymer (A2);
5 to 60% by weight of block-copolymer (A3); and
30 to 60% by weight of copolymer (A4);
wherein the total weight of components (A1), (A2), (A3) and (A4) adds up to 100% by weight.

3. A polymer mixture (A) according to claim 1 or 2 wherein the proportion of the soft phase - based on mixture (A) - is from 20 to 32% by volume.

4. A polymer mixture (A) according to any of claims 1 to 3 wherein in block copolymers (A1), (A2) and (A3) the at least one block B is a diene homopolymer block.

5. A polymer mixture (A) according to any of claims 1 to 4 wherein block copolymers (A1), (A2) and (A3) have the structure S1-B-S2.

6. A polymer mixture (A) according to any of claims 1 to 5 wherein block copolymer (A2) is made from 67 to 82% by weight of at least one vinylaromatic monomer, in particular styrene, and 18 to 33% by weight, of at least one conjugated diene, in particular butadiene and/or isoprene.

7. A polymer mixture (A) according to any of claims 1 to 6 wherein copolymer (A4) is composed of a single copolymer block (B/S).

8. A polymer mixture (A) according to any of claims 1 to 7 wherein block copolymer (A3) is made from 50 to 65% by weight, of at least one vinylaromatic monomer, in particular styrene, and 35 to 50% by weight, of at least one conjugated diene, in particular butadiene and/or isoprene.

9. A process for the preparation of a polymer mixture (A) according to any of claims 1 to 8 comprising the following steps:
(i) separate preparation of block copolymers (A1), (A2) and (A3) and copolymer (A4) in four reactor vessels by sequential anionic polymerization of vinylaromatic monomers and conjugated dienes with organo-alkali-metal initiators in a solvent and under inert atmosphere;
(ii) after termination of the polymerization, mixing together the separately obtained solutions of block copolymers (A1), (A2), (A3), and copolymer (A4), to obtain a solution of mixture (A); and
(iii) then degassing of the solution of mixture (A) obtained in step (ii), and optional granulation.

10. Polymer mixture (A) according to any of claims 1 to 8 obtained by a process according to claim 9.

11. Polymer composition comprising polymer mixture (A) according to any of claims 1 to 8 or 10 and further one or more optional additive and/or processing aid (B) and/or at least one optional thermoplastic polymer (C) - different from (A1), (A2), (A3), (A4) and (B).

12. Polymer composition according to claim 11 comprising:
70 to 100 wt.-% of polymer mixture (A),
0 to 5 wt.-% of one or more additives and/or processing aids (B), and
0 to 25 wt.-% of at least one thermoplastic polymer (C),
where the amounts of (A), (B) and (C) add up to 100 wt.-%.

13. Polymer composition according to claim 11 or 12 wherein the thermoplastic polymer (C) is polystyrene, in particular GPPS.

14. A shaped article, in particular a film, produced from polymer mixture (A) according to any of claims 1 to 8 or 10 or from the polymer composition according to any of claims 11 to 13.

15. Use of a polymer mixture (A) according to any of claims 1 to 8 or 10 or of the polymer composition according to any of claims 11 to 13 for the production of films.

## Patentansprüche

1. Polymermischung (A), umfassend Komponenten (A1), (A2), (A3) und Komponente (A4):
(A1): mindestens ein lineares Blockcopolymer (A1), umfassend mindestens zwei Polymerblöcke S, bestehend aus 85 bis 100 Gew.-% mindestens eines vinylaromatischen Monomers und optional 0 bis 15 Gew.-% mindestens eines konjugierten Diens, und mindestens einen Polymerblock B, bestehend aus 85 bis 100 Gew.-% mindestens eines konjugierten Diens und optional 0 bis 15 Gew.-% mindestens eines vinylaromatischen Monomers;
wobei mindestens zwei der Blöcke S endständige Blöcke S1 und S2 sind;
wobei Blockcopolymer (A1)
• aus 30 bis 60 Gew.-% mindestens eines vinylaromatischen Monomers, insbesondere Styrol, und 40 bis 70 Gew.-% mindestens eines konjugierten Diens, insbesondere Butadien und/oder Isopren, mehr bevorzugt Butadien, besteht;
• ein zahlenmittleres Molekulargewicht Mn von 100.000 bis 145.000 g/mol aufweist und
• scharfe Blockübergänge aufweist;
(A2): mindestens ein lineares Blockcopolymer (A2), umfassend mindestens zwei Polymerblöcke S, bestehend aus 85 bis 100 Gew.-% mindestens eines vinylaromatischen Monomers und optional 0 bis 15 Gew.-% mindestens eines konjugierten Diens,
und mindestens einen Polymerblock B, bestehend aus 85 bis 100 Gew.-% mindestens eines konjugierten Diens und optional 0 bis 15 Gew.-% mindestens eines vinylaromatischen Monomers;
wobei mindestens zwei der Blöcke S endständige Blöcke S1 und S2 sind;
wobei das Blockcopolymer (A2)
• aus 66 bis 84 Gew.-% mindestens eines vinylaromatischen Monomers, insbesondere Styrol, und 16 bis 34 Gew.-% mindestens eines konjugierten Diens, insbesondere Butadien und/oder Isopren, mehr bevorzugt Butadien, besteht;
• ein zahlenmittleres Molekulargewicht Mn von 150.000 bis 200.000 g/mol aufweist; und
• scharfe Blockübergänge aufweist;
(A3): mindestens ein lineares Blockcopolymer (A3), umfassend mindestens zwei Polymerblöcke S, die aus 85 bis 100 Gew.-% mindestens eines vinylaromatischen Monomers und optional 0 bis 15 Gew.-% mindestens eines konjugierten Diens bestehen, und mindestens einen Polymerblock B, der aus 85 bis 100 Gew.-% mindestens eines konjugierten Diens und optional 0 bis 15 Gew.-% mindestens eines vinylaromatischen Monomers besteht;
wobei mindestens zwei der Blöcke S endständige Blöcke S1 und S2 sind;
wobei das Blockcopolymer (A3)
• aus 40 bis 65 Gew.-%, bevorzugt 50 bis 65 Gew.-%, mindestens eines vinylaromatischen Monomers, insbesondere Styrol, und 35 bis 60 Gew.-%, bevorzugt 35 bis 50 Gew.-%, mindestens eines konjugierten Diens, insbesondere Butadien und/oder Isopren, mehr bevorzugt Butadien, besteht;
• ein zahlenmittleres Molekulargewicht Mn von 150.000 bis 200.000 g/mol aufweist; und
• scharfe Blockübergänge aufweist;
(A4): mindestens ein Copolymer (A4), umfassend mindestens einen statistischen Copolymerblock (B/S), der aus 80 bis 95 Gew.-% mindestens eines vinylaromatischen Monomers und 5 bis 20 Gew.-% mindestens eines konjugierten Diens aufgebaut ist; und
wobei das Copolymer (A4) ein zahlenmittleres Molekulargewicht Mn von mehr als 200.000 g/mol, bevorzugt 210.000 bis 350.000 g/mol aufweist;
wobei
• der Anteil einer weichen Phase der Polymermischung (A), aufgebaut aus 85 bis 100 Gew.-% polymerisiertem konjugiertem Dien und optional bis zu 15 Gew.-% polymerisiertem vinylaromatischem Monomer, von - bezogen auf Mischung (A) - 15 bis 34 Vol.-% beträgt;
• die weiche Phase der Polymermischung (A) - eingebettet in eine harte Phase der Mischung (A), aufgebaut aus 85 bis 100 Gew.-% polymerisiertem vinylaromatischem Monomer - eine zylindrische Morphologie aufweist;
• das zahlenmittlere Molekulargewicht Mn der gesamten Polymermischung (A) mindestens 120.000 g/mol beträgt;
• in der Polymermischung (A) die Komponente (A4) in einer Menge von 30 bis 60 Gew.-% vorhanden ist;
• das zahlenmittlere Molekulargewicht Mn durch GPC gemäß ISO 16014-3:2012 bestimmt wird; und
• die Morphologie durch Transmissionselektronenmikroskopie bestimmt wird.

2. Polymermischung (A) nach Anspruch 1, umfassend:
5 bis 60 Gew.-% Block-Copolymer (A1);
5 bis 60 Gew.-% Block-Copolymer (A2);
5 bis 60 Gew.-% Block-Copolymer (A3); und
30 bis 60 Gew.-% Copolymer (A4);
wobei das Gesamtgewicht der Komponenten (A1), (A2), (A3) und (A4) sich auf 100 Gew.-% addiert.

3. Polymermischung (A) nach Anspruch 1 oder 2, wobei der Anteil der weichen Phase - bezogen auf die Mischung (A) - 20 bis 32 Vol.-% beträgt.

4. Polymermischung (A) nach einem der Ansprüche 1 bis 3, wobei in Blockcopolymeren (A1), (A2) und (A3) der mindestens eine Block B ein Dien-Homopolymerblock ist.

5. Polymermischung (A) nach einem der Ansprüche 1 bis 4, wobei Blockcopolymere (A1), (A2) und (A3) die Struktur S1-B-S2 aufweisen.

6. Polymermischung (A) nach einem der Ansprüche 1 bis 5, wobei Blockcopolymer (A2) aus 67 bis 82 Gew.-% mindestens eines vinylaromatischen Monomers, insbesondere Styrol, und 18 bis 33 Gew.-% mindestens eines konjugierten Diens, insbesondere Butadien und/oder Isopren, hergestellt ist.

7. Polymermischung (A) nach einem der Ansprüche 1 bis 6, wobei Copolymer (A4) aus einem einzigen Copolymerblock (B/S) besteht.

8. Polymermischung (A) nach einem der Ansprüche 1 bis 7, wobei Blockcopolymer (A3) aus 50 bis 65 Gew.-% mindestens eines vinylaromatischen Monomers, insbesondere Styrol, und 35 bis 50 Gew.-% mindestens eines konjugierten Diens, insbesondere Butadien und/oder Isopren, hergestellt ist.

9. Verfahren zur Herstellung einer Polymermischung (A) nach einem der Ansprüche 1 bis 8, umfassend die folgenden Schritte:
(i) getrennte Herstellung der Blockcopolymere (A1), (A2) und (A3) und des Copolymers (A4) in vier Reaktorgefäßen durch sequentielle anionische Polymerisation von vinylaromatischen Monomeren und konjugierten Dienen mit Organo-Alkalimetall-Initiatoren in einem Lösungsmittel und unter inerter Atmosphäre;
(ii) nach Beendigung der Polymerisation Zusammenmischen der getrennt erhaltenen Lösungen der Blockcopolymere (A1), (A2), (A3) und des Copolymers (A4), um eine Lösung der Mischung (A) zu erhalten; und
(iii) anschließendes Entgasen der in Schritt (ii) erhaltenen Lösung der Mischung (A) und gegebenenfalls Granulierung.

10. Polymermischung (A) nach einem der Ansprüche 1 bis 8, erhalten durch ein Verfahren nach Anspruch 9.

11. Polymerzusammensetzung, umfassend eine Polymermischung (A) nach einem der Ansprüche 1 bis 8 oder 10 und ferner ein oder mehrere optionale Additive und/oder Verarbeitungshilfsmittel (B) und/oder mindestens ein optionales thermoplastisches Polymer (C) - verschieden von (A1), (A2), (A3), (A4) und (B).

12. Polymerzusammensetzung nach Anspruch 11, umfassend:
70 bis 100 Gew.-% Polymermischung (A),
0 bis 5 Gew.-% eines oder mehrerer Additive und/oder Verarbeitungshilfsmittel (B), und
0 bis 25 Gew.-% mindestens eines thermoplastischen Polymers (C),
wobei sich die Mengen von (A), (B) und (C) auf 100 Gew.-% addieren.

13. Polymerzusammensetzung nach Anspruch 11 oder 12, wobei das thermoplastische Polymer (C) Polystyrol, insbesondere GPPS, ist.

14. Formkörper, insbesondere Folie, hergestellt aus einer Polymermischung (A) nach einem der Ansprüche 1 bis 8 oder 10 oder aus der Polymerzusammensetzung nach einem der Ansprüche 11 bis 13.

15. Verwendung einer Polymermischung (A) nach einem der Ansprüche 1 bis 8 oder 10 oder der Polymerzusammensetzung nach einem der Ansprüche 11 bis 13 zur Herstellung von Folien.

## Revendications

1. Mélange de polymères (A) comprenant les composants (A1), (A2), (A3) et le composant (A4) :
(A1) : au moins un copolymère à blocs linéaire (A1) comprenant au moins deux blocs polymères S constitués de 85 à 100% en poids d'au moins un monomère vinylaromatique et éventuellement de 0 à 15% en poids d'au moins un diène conjugué, et au moins un bloc polymère B constitué de 85 à 100% en poids d'au moins un diène conjugué et éventuellement de 0 à 15% en poids d'au moins un monomère vinylaromatique ;
dans lequel au moins deux des blocs S sont des blocs terminaux S1 et S2 ;
dans lequel le copolymère à blocs (A1)
• est constitué de 30 à 60 % en poids d'au moins un monomère vinylaromatique, en particulier le styrène, et de 40 à 70 % en poids d'au moins un diène conjugué, en particulier le butadiène et/ou l'isoprène, plus de préférence le butadiène ;
• a un poids moléculaire moyen en nombre Mn de 100 000 à 145 000 g/mol, et
• présente des transitions de bloc nettes ;
(A2) : au moins un copolymère à blocs linéaire (A2) comprenant au moins deux blocs polymères S constitués de 85 à 100% en poids d'au moins un monomère vinylaromatique et éventuellement de 0 à 15% en poids d'au moins un diène conjugué,
et au moins un bloc polymère B constitué de 85 à 100% en poids d'au moins un diène conjugué et éventuellement de 0 à 15% en poids d'au moins un monomère vinylaromatique ;
dans lequel au moins deux des blocs S sont des blocs terminaux S1 et S2 ;
dans lequel le copolymère séquencé (A2)
• est constitué de 66 à 84% en poids d'au moins un monomère vinylaromatique, en particulier le styrène, et de 16 à 34% en poids d'au moins un diène conjugué, en particulier le butadiène et/ou l'isoprène, plus de préférence le butadiène ;
• a un poids moléculaire moyen en nombre Mn de 150 000 à 200 000 g/mol ; et
• présente des transitions de bloc nettes ;
(A3) : au moins un copolymère à blocs linéaire (A3) comprenant au moins deux blocs polymères S constitués de 85 à 100 % en poids d'au moins un monomère vinylaromatique et éventuellement de 0 à 15 % en poids d'au moins un diène conjugué, et au moins un bloc polymère B constitué de 85 à 100 % en poids d'au moins un diène conjugué et éventuellement de 0 à 15 % en poids d'au moins un monomère vinylaromatique ;
dans lequel au moins deux des blocs S sont des blocs terminaux S1 et S2 ;
dans lequel le copolymère séquencé (A3)
• est constitué de 40 à 65 % en poids, de préférence de 50 à 65 % en poids, d'au moins un monomère vinylaromatique, en particulier le styrène, et de 35 à 60 % en poids, de préférence de 35 à 50 % en poids, d'au moins un diène conjugué, en particulier le butadiène et/ou l'isoprène, plus de préférence le butadiène ;
• a une masse moléculaire moyenne en nombre Mn de 150 000 à 200 000 g/mol ; et
• présente des transitions de bloc nettes ;
(A4) : au moins un copolymère (A4) comprenant au moins un bloc copolymère aléatoire (B/S) constitué de 80 à 95 % en poids d'au moins un monomère vinylaromatique et de 5 à 20 % en poids d'au moins un diène conjugué ; et
dans lequel le copolymère (A4) a une masse moléculaire moyenne en nombre Mn de plus de 200 000 g/mol, de préférence de 210 000 à 350 000 g/mol ;
dans lequelle
• la proportion d'une phase molle du mélange de polymères (A), constituée de 85 à 100% en poids de diène conjugué polymérisé et éventuellement jusqu'à 15% en poids de monomère vinylaromatique polymérisé, est comprise entre - sur la base du mélange (A) - 15 et 34% en volume ;
• la phase molle du mélange de polymères (A) - noyée dans une phase dure du mélange (A), constituée de 85 à 100 % en poids de monomère vinylaromatique polymérisé - a une morphologie cylindrique ;
• la masse moléculaire globale moyenne en nombre Mn du mélange de polymères (A) est d'au moins 120 000 g/mol ;
• dans le mélange de polymères (A), le composant (A4) est présent en une quantité comprise entre 30 et 60 % en poids ;
• la masse moléculaire moyenne en nombre Mn est déterminée par GPC conformément à la norme ISO 16014-3:2012 ; et
la morphologie est déterminée par microscopie électronique à transmission.

2. Mélange de polymères (A) selon la revendication 1 comprenant :
5 à 60% en poids de copolymère à blocs (A1) ;
5 à 60% en poids de copolymère à blocs (A2) ;
5 à 60% en poids de copolymère à blocs (A3) ; et
30 à 60% en poids de copolymère (A4) ;
dans lequel le poids total des composants (A1), (A2), (A3) et (A4) s'additionne jusqu'à 100% en poids.

3. Mélange de polymères (A) selon la revendication 1 ou 2, dans lequel la proportion de la phase molle - sur la base du mélange (A) - est de 20 à 32 % en volume.

4. Mélange de polymères (A) selon l'une quelconque des revendications 1 à 3, dans lequel, dans les copolymères à blocs (A1), (A2) et (A3), l'au moins un bloc B est un bloc homopolymère diénique.

5. Mélange de polymères (A) selon l'une quelconque des revendications 1 à 4, dans lequel les copolymères à blocs (A1), (A2) et (A3) ont la structure S1-B-S2.

6. Mélange de polymères (A) selon l'une quelconque des revendications 1 à 5, dans lequel le copolymère à blocs (A2) est constitué de 67 à 82% en poids d'au moins un monomère vinylaromatique, en particulier le styrène, et de 18 à 33% en poids d'au moins un diène conjugué, en particulier le butadiène et/ou l'isoprène.

7. Mélange de polymères (A) selon l'une quelconque des revendications 1 à 6, dans lequel le copolymère (A4) est composé d'un seul bloc de copolymère (B/S).

8. Mélange de polymères (A) selon l'une quelconque des revendications 1 à 7, dans lequel le copolymère à blocs (A3) est constitué de 50 à 65% en poids d'au moins un monomère vinylaromatique, en particulier le styrène, et de 35 à 50% en poids d'au moins un diène conjugué, en particulier le butadiène et/ou l'isoprène.

9. Procédé de préparation d'un mélange de polymères (A) selon l'une quelconque des revendications 1 à 8, comprenant les étapes suivantes :
(i) préparation séparée des copolymères à blocs (A1), (A2) et (A3) et du copolymère (A4) dans quatre cuves de réacteur par polymérisation anionique séquentielle de monomères vinylaromatiques et de diènes conjugués avec des initiateurs organo-alcalins-métalliques dans un solvant et sous atmosphère inerte ;
(ii) après la fin de la polymérisation, mélange des solutions obtenues séparément de copolymères à blocs (A1), (A2), (A3) et du copolymère (A4) pour obtenir une solution du mélange (A) ; et
(iii) dégazage de la solution du mélange (A) obtenue à l'étape ii) et granulation facultative.

10. Mélange de polymères (A) selon l'une quelconque des revendications 1 à 8, obtenu par un procédé selon la revendication 9.

11. Composition de polymère comprenant le mélange de polymères (A) selon l'une quelconque des revendications 1 à 8 ou 10 et en outre un ou plusieurs additifs facultatifs et/ou auxiliaires de fabrication (B) et/ou au moins un polymère thermoplastique facultatif (C) - différent de (A1), (A2), (A3), (A4) et (B).

12. Composition de polymère selon la revendication 11 comprenant :
70 à 100 % en poids du mélange de polymères (A),
0 à 5 % en poids d'un ou plusieurs additifs et/ou auxiliaires de fabrication (B), et
0 à 25 % en poids d'au moins un polymère thermoplastique (C),
où les quantités de (A), (B) et (C) s'additionnent jusqu'à 100 % en poids.

13. Composition de polymère selon la revendication 11 ou 12, dans laquelle le polymère thermoplastique (C) est le polystyrène, en particulier le GPPS.

14. Article façonné, en particulier film, produit à partir du mélange de polymères (A) selon l'une quelconque des revendications 1 à 8 ou 10 ou à partir de la composition de polymères selon l'une quelconque des revendications 11 à 13.

15. Utilisation d'un mélange de polymères (A) selon l'une quelconque des revendications 1 à 8 ou 10 ou de la composition de polymères selon l'une quelconque des revendications 11 à 13 pour la production de films.
